# EUROPÄISCHE PATENTSCHRIFT

(11) **EP 1 258 638 B1**
(45) Veröffentlichungstag und Bekanntmachung des Hinweises auf die Patenterteilung: **07.06.2006**
(21) Anmeldenummer: 02003244.7
(22) Anmeldetag: 21.02.2002
(51) Int. Cl.: F16B 2/02, G01D 11/30, F16B 43/00

(54) **Aufnahmeelement und Gegenstand mit Aufnahmeelement**
Holder and object with a holder
Support et objet avec un support

(30) Priorität: 19.05.2001 DE 10124473
(43) Veröffentlichungstag der Anmeldung: 20.11.2002
(73) Patentinhaber: Valeo Schalter und Sensoren GmbH, 74321 Bietigheim-Bissingen (DE)
(72) Erfinder: Wehling, Hans Wilhelm, 74074 Heilbronn (DE); Elmering, Kai, 74321 Bietigheim-Bissingen (DE); Nicolai, Jens, 03103 Neupetershein (DE)
(74) Vertreter: Dreiss, Fuhlendorf, Steimle & Becker

(56) Entgegenhaltungen:
- US-A- 3 936 794
- US-A- 5 228 795

## Beschreibung

Die Erfindung betrifft eine Befestigungsvorrichtung mit den Merkmalen des Oberbegriffs des Anspruchs 1.

Zur Halterung des ersten Gegenstandes an dem zweiten Gegenstand wirkt folglich das Befestigungsmittel zwischen dem Aufnahmeelement und dem zweiten Gegenstand.

Derartige Aufnahmeelemente sind beispielsweise in Form von metallischen Buchsen bekannt. Derartige Buchsen bilden beispielsweise ein Zwischenstück zwischen einem ersten Gegenstand, der aus Kunststoff ist und einem zweiten Gegenstand, der beispielsweise aus Metall ist. Ein derartiges Aufnahmeelement dient zur positionsgenauen und dauerhaften Befestigung des ersten Gegenstandes aus Kunststoff an dem zweiten Gegenstand aus beispielsweise Metall.

Bei dem bekannten Stand der Technik hat sich als nachteilig herausgestellt, dass zwischen dem Aufnahmeelement und insbesondere dem mit dem Aufnahmeelement zusammenwirkenden zweiten Gegenstand Nichtverträglichkeiten der Materialpaarungen auftreten können. Insbesondere kann an den Berührungsflächen Kontaktkorrosion auftreten, wodurch eine dauerhaft positionsgenaue Befestigung des ersten Gegenstandes beeinträchtigt werden kann. Entsprechend kann ein Nichtverträglichkeit des Befestigungsmittels mit dem Aufnahmeelement auftreten. Auch hier kann es zu unerwünschten chemischen und elektrischen Reaktionen kommen

Aus der US-A-5,228,795 ist eine Haltevorrichtung bekannt, bei der eine Keramikbuchse zum Einsatz kommt. Es ist jedoch erforderlich, die Keramikbuchse gesondert in dem sie aufnehmenden Gegenstand zu befestigen ,wofür Befestigungsmittel, z.B. Klebstoff oder dergleichen erforderlich sind. Aus der US-A-3,936,794 ist ein hülsenförmiger Abgassensor bekannt, in welchem eine Keramikhülse gelagert ist, die einen Sensor umschließt und am Umfang Heizdrähte trägt. Auch diese Keramikhülse muss gesondert befestigt werden.

Der vorliegenden Erfindung liegt deshalb die Aufgabe zugrunde, ein Aufnahmeelement vorzuschlagen, bei dem ein dauerhaft positionsgenaues Haltern des ersten Gegenstandes an einem zweiten Gegenstand ermöglicht wird, ohne dass das Aufnahmeelement für sich alleine Befestigungsmittel bedarf.

Diese Aufgabe wird mit einer Befestigungsvorrichtung gelöst, die die Merkmale des Anspruchs 1 aufweist.

Das Aufnahmeelement kann erfindungsgemäß wenigstens abschnittsweise formschlüssig an dem ersten Gegenstand gehaltert sein. Es hat sich gezeigt, dass keramische Werkstoffe sich mit den angrenzenden Materialien chemisch und elektrisch neutral verhalten. Insbesondere tritt keine Kontaktkorrosion auf. Ferner können keramische Werkstoffe günstig verarbeitet werden und weisen zudem hohe Festigkeitswerte auf. Mit dem erfindungsgemäßen Aufnahmeelement kann demnach eine dauerhaft positionsgenaue Befestigung des ersten Gegenstandes an dem zweiten Gegenstand erreicht werden. Vorteilhafterweise ist das Aufnahmeelement vollständig aus Keramik.

Ein weiterer Vorteil der Erfindung ist, dass das spezifische Gewicht von keramischen Werkstoffen relativ gering ist, wodurch eine Gewichtsreduzierung gegenüber dem bekannten Stand der Technik erzielt wird.

Erfindungsgemäß kann vorgesehen sein, dass das Aufnahmeelement buchsenartig mit einem Durchgangsloch ausgebildet ist, wobei das Durchgangsloch zur Aufnahme des Befestigungsmittels vorgesehen ist. Insbesondere kann das Aufnahmeelement in den ersten Gegenstand eingeformt bzw. von dem ersten Gegenstand umspritzt sein.

Das Befestigungsmittel, das insbesondere eine Schraube, ein Niet, ein Stift od.dgl. sein kann, durchgreift zur Befestigung des ersten Gegenstandes mit dem zweiten Gegenstand vorteilhafterweise das Durchgangsloch des Aufnahmeelements. Das Aufnahmeelement bzw. der erste Gegenstand kann damit auf günstige Art und Weise an dem zweiten Gegenstand dauerhaft positioniert werden.

Erfindungsgemäß ist denkbar, dass der erste Gegenstand eine Sensorhalterung, insbesondere eine Halterung für einen Motormanagementsensor, sein kann. Derartige Sensorhalterungen sind regelmäßig aus einem Kunststoff, die über ein insbesondere buchsenartiges Aufnahmeelement und einem entsprechenden Befestigungsmittel mit einem zweiten Gegenstand, insbesondere einem Motorblock, verbunden werden können.

Die eingangs genannte Aufgabe wird außerdem durch einen Gegenstand mit einem im Vorhergehenden beschriebenen Aufnahmeelement gelöst. Ein derartiger Gegenstand, im Vorhergehenden als erster Gegenstand bezeichnet, kann über ein keramisches Aufnahmeelement mit chemisch und elektrisch neutralen Eigenschaften an einem zweiten Gegenstand befestigt werden.

Die erfindungsgemäßen, keramischen Aufnahmeelemente können vorteilhafterweise die gleichen Geometrien wie bekannte, metallische Aufnahmeelementen aufweisen. Damit können die erfindungsgemäßen Aufnahmeelemente bekannte Aufnahmeelemente ersetzen.

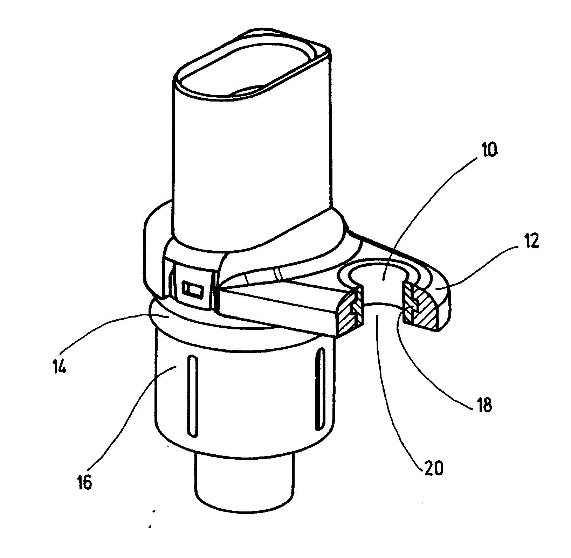

Weitere vorteilhafte Ausgestaltungen und Einzelheiten der Erfindung sind der nachfolgenden Beschreibung zu entnehmen, in der die Erfindung anhand des in der Zeichnung dargestellten Ausführungsbeispiels näher beschrieben und erläutert ist.

Die Figur zeigt ein erfindungsgemäßes Aufnahmeelement in Form einer Keramikbuchse 10. Die Keramikbuchse 10 wird an ihrer Mantelfläche von einem ersten Gegenstand, nämlich von einer Kunststofflasche 12, umgeben. Die Kunststofflasche 12 ist Bestandeil einer Kunststoffhalterung 14, die ein Sensorgehäuse 16 aufnimmt.

Die Mantelfläche der Keramikbuchse 10 sieht einen Ringbund 18 vor, über welchen die Keramikbuchse 10 in der Kunststofflasche 12 formschlüssig gehaltert ist.

Über die Keramikbuchse 10 kann die Halterung 14 an einen zweiten, nicht dargestellten, Gegenstand, beispielsweise an einen Motorblock, positionsgenau dauerhaft angeschraubt werden. Aufgrund der elektrischen und chemischen Neutralität der Keramikbuchse 10 kann zwischen der Keramikbuchse 10 und dem Motorblock keine Kontaktkorrosion auftreten. Ferner kann keine Kontaktkorrosion zwischen einer in das Durchgangsloch 20 der Keramikbuchse 10 einzuführenden Schraube, die mit dem zweiten Gegenstand verschraubt wird, stattfinden.

Alle in der Beschreibung, den nachfolgenden Ansprüchen und in der Zeichnung dargestellten Merkmale können sowohl einzeln als auch in beliebiger Kombination miteinander erfindungswesentlich sein.

## Patentansprüche

1. Befestigungsvorrichtung mit einem Aufnahmeelement (10) zur Aufnahme eines Befestigungsmittels, wobei das Aufnahmeelement (10) an einem ersten Gegenstand (12) befestigt ist und der erste Gegenstand (12) mit dem Befestigungsmittel über das Aufnahmeelement (10) an einem zweiten Gegenstand befestigbar ist, und dass das Aufnahmeelement (10) aus einem keramischen Werkstoff ist, **dadurch gekennzeichnet, dass** das Aufnahmeelement (10) an seiner Mantelfläche einen Ringbund (18) vorsieht, über welchen das Aufnahmeelement (10) im ersten Gegenstand (12) wenigstens abschnittsweise formschlüssig gehalten ist.

2. Befestigungsvorrichtung nach Anspruch 1, **dadurch gekennzeichnet, dass** Aufnahmeelement (10) buchsenartig mit einem Durchgangsloch (20) ausgebildet ist, wobei das Durchgangsloch (20) zur Aufnahme des Befestigungsmittels vorgesehen ist.

3. Befestigungsvorrichtung nach Anspruch 1 oder 2, **dadurch gekennzeichnet, dass** das Befestigungsmittel eine Schraube, ein Niet, ein Stift oder dergleichen ist.

4. Befestigungsvorrichtung nach einem der vorhergehenden Ansprüche, **dadurch gekennzeichnet, dass** der erste Gegenstand (12) Teil einer Sensorhalterung (14), insbesondere einer Halterung für einen Motormanagementsensor, ist.

5. Befestigungsvorrichtung nach einem der vorhergehenden Ansprüche, **dadurch gekennzeichnet, dass** der zweite Gegenstand ein Motorblock ist.

## Claims

1. A securing device having a receptacle element (10) for receiving a securing means, in which the receptacle element (10) is secured to a first object (12) and the first object (12) can be secured to a second object with the securing means via the receptacle element (10), and that the receptacle element (10) is of a ceramic material, **characterized in that** the receptacle element (10), on its jacket face, provides an annular collar (18), by way of which the receptacle element (10) is held at least intermittently by positive engagement in the first object (12).

2. The securing device as defined by claim 1, **characterized in that** the receptacle element (10) is embodied in bushlike fashion with a through hole (20), and the through hole (20) is intended for receiving the securing means.

3. The securing device as defined by claim 1 or 2, **characterized in that** the securing means is a screw, rivet, pin or the like.

4. The securing device as defined by one of the foregoing claims, **characterized in that** the first object (12) is part of a sensor holder (14), in particular a holder for an engine management sensor.

5. The securing device as defined by one of the foregoing claims, **characterized in that** the second object is an engine block.

## Revendications

1. Dispositif de fixation comportant un élément de logement (10) pour le logement d'un moyen de fixation, l'élément de logement (10) étant fixé à un premier objet (12) et le premier objet (12), avec le moyen de fixation, pouvant être fixé à un second objet par le biais de l'élément de logement (10), et l'élément de logement (10) étant fabriqué dans un matériau céramique, **caractérisé en ce que** l'élément de logement (10) prévoit, sur sa surface latérale, un collet annulaire (18) par le biais duquel l'élément de logement (10) est maintenu dans le premier objet (12) par coopération de formes, au moins partiellement.

2. Dispositif de fixation selon la revendication 1, **caractérisé en ce que** l'élément de logement (10) est réalisé à mode de douille avec un trou débouchant (20), le trou débouchant (20) étant prévu pour le logement du moyen de fixation.

3. Dispositif de fixation selon la revendication 1 ou 2, **caractérisé en ce que** le moyen de fixation est une vis, un rivet, une broche ou d'autres objets similaires.

4. Dispositif de fixation selon l'une quelconque des revendications précédentes, **caractérisé en ce que** le premier objet (12) fait partie intégrante d'un support de capteur (14), en particulier d'un support pour un capteur de gestion du moteur.

5. Dispositif de fixation selon l'une quelconque des revendications précédentes, **caractérisé en ce que** le second objet est un bloc moteur.
